# EUROPEAN PATENT SPECIFICATION

(11) **EP 2 536 271 B1**
(45) Date of publication and mention of the grant of the patent: **09.04.2014**
(21) Application number: 11712333.1
(22) Date of filing: 17.02.2011
(51) Int. Cl.: B01F 7/04, A01K 5/00, A23N 17/00, B01F 13/00

(54) **AN ANIMAL FEED MIXING, DISPENSING AND STORAGE APPARATUS**
TIERFUTTERMISCHUNG, AUSGABE- UND LAGERUNGSVORRICHTUNG
APPAREIL DE MÉLANGE, DE DISTRIBUTION ET DE STOCKAGE D'ALIMENTS POUR ANIMAUX

(30) Priority: 17.02.2010 IE 20100086; 08.10.2010 GB 201016998
(43) Date of publication of application: 26.12.2012
(73) Proprietor: Ward, Michael, County Monaghan, Catleblayney (IE)
(72) Inventor: Ward, Michael, County Monaghan, Catleblayney (IE)
(74) Representative: Walsh, Marie Goretti
(86) International application number: PCT/IB2011/050662
(87) International publication number: WO 2011/101801

(56) References cited:
- DE-U1- 29 911 053
- US-A- 2 872 166
- US-A- 3 000 107
- US-A- 3 215 408
- US-A1- 2009 238 031

## Description

The present invention relates to an animal feed mixing, dispensing and storage apparatus, see e.g. document US-A- 2872 166.

Prior art feed mixing and dispensing apparatus comprises a conical container having a vertical mixing auger rotatably mounted inside the container and an outlet opening in the side wall near the base of the container for dispensing the mixed feed. A dispensing auger is often provided at the outlet opening to facilitate the discharge of the feed. The disadvantages of such a known apparatus include its limited capacity, limited mobility, lack of hygiene, unsuitability for storage and lack of control over the dispensing process.

The object of the present invention is to provide an improved feed mixing, dispensing and storage apparatus having enhanced capacity and improved means of dispensing the mixed material.

The present invention as defined in claim 1 provides a feed mixing, dispensing and storage apparatus comprising at least one container having a vertical axis and a pair of orthogonal horizontal axes, the container comprising a wall defining a top opening and an interior and a mixing shaft rotatably mounted within the interior of the container, the mixing shaft being connected to a drive means;
wherein the wall defines an upper section and a lower section of container and a base end of the container, the base end having at least one outlet opening through which the feed is dispensed under gravity; wherein the lower section of the side wall includes an arrangement configured for directing the feed to the outlet opening;
wherein a shutter member sealingly closes the outlet opening, the shutter member being movable by a further drive means to controllably move the shutter to open and close the outlet opening
the apparatus further comprising a tubular duct extending from the outlet opening of the container, the duct having an inlet opening arranged in sealed communication with the outlet opening for receiving feed from the container; the duct being substantially sealed except for a discharge opening provided in the duct remote the outlet openings of the container for discharging the feed to a desired location; and
a transfer auger rotatably mounted along the interior of the duct for transferring the feed dispensed from the outlet opening of the container to the discharge opening, the transfer auger being connected to and driven by a motor;
wherein the mixing shaft is mounted substantially horizontally along the interior of the or each container, the mixing shaft comprising mixing blades configured to mix the feed in the lower and the upper sections of the container.

The apparatus of the present invention is primarily designed for blending a coarse ration feed (commonly referred to in the art as a "blend") which is a mixture of cereals such as barley, wheat, rye etc., as opposed to a "diet ration" feed which is a mixture of cereal and forage such as straw, silage etc. Accordingly, the references to "feed" in the present description should be interpreted as referring to a "coarse ration" or "blend" unless otherwise stated.

Known mixing apparatuses with mixing augers inside are designed for mixing and dispensing diet ration feed and are not suitable for blending coarse ration as augers are not capable of provide a consistent blend and are prone to damage when mixing coarse ration.

The provision of the duct and its discharge opening remote the outlet opening of the container allows the discharge of the feed directly to a desired location, for example, a location where the feed is to be consumed, without the need for a separate loading/unloading vehicle, and, at the same time, reduces loss of feed during transfer.

In a preferred embodiment, the apparatus comprises a pair of adjacently disposed containers and the tubular duct extends between the outlet openings of each container.

The apparatus is superior over the prior art apparatuses in that it provides for considerable flexibility and convenience of the use of the containers. For example, it provides for a possibility for simultaneous mixing in one container and dispensing of mixed feed from the other container. Alternatively, while one container can be used for mixing and dispensing at a given time, the other container can be used for storing mixed feed, thereby eliminating the need for a separate storage arrangement. Furthermore, different feeds can be prepared in the containers. The shutters keep the outlet openings of the containers sealed when the feed is not being dispensed thereby minimising the risk of contamination of the interior of the container. A further advantage resides in that a single transfer auger mechanism is provided to discharge the feed from the container. The functions of blending, storing, transportation and dispensing are all combined in the apparatus of the present invention without the need for a second tractor or a separate grain storage structure. Furthermore, the provision of the arrangement for directing the mixed feed into the duct through the outlet opening provides for smooth flow of the mixed blend into the duct without the outlet opening becoming clogged and without the blend being stuck at various locations inside the container.

In one preferred embodiment, the outlet opening is defined in a plane substantially transverse a vertical axis of the container. Preferably, the outlet opening is defined by a lowermost downwardly facing portion of the container. Ideally, the tubular duct extends below the lower section of the container.

Advantageously, the arrangement for directing the feed to the outlet opening comprises a funnel shaped structure having a surrounding wall with an upper wider open end and a lower narrower open end, the lower narrower open end defining the outlet opening.

Preferably, in the upper section of the container the wall is substantially vertical and is preferably polygonal, more preferably, rectangular, in a plane transverse the vertical axis of the container.

In an advantageous embodiment, in the lower section of the container the wall converges or tapers downwardly at least at a pair of opposing sides of the container. Preferably, in the lower section of the container the wall converges downwardly at a pair of opposing sides of the container and the wall is substantially vertical at another pair of opposing sides of the container. Alternatively, in the lower section of the container the wall converges or tapers downwardly around the entire perimeter of the container.

In a preferred embodiment, in the lower section of the container the wall is convex on the outside of the container and concave on the inside of the container at the sides of the container where the wall converges. Ideally, in the lower section of the container the wall is curved at the sides of the container where the wall converges.

In a preferred embodiment, the upper wider open end of the funnel shaped structure is sealingly attached to the base end of the container to receive the feed and direct the feed to the outlet opening.

In another embodiment, the funnel shaped structure is defined by the converging or tapering wall.

Preferably, the outlet opening is defined by lowermost downwardly facing edges of the surrounding wall of the funnel shaped structure.

The mixing shaft comprises a plurality of blades for mixing the feed, the blades being spaced along the mixing shaft. The blades extend from the shaft towards the wall of the container and terminate short of the wall so as to provide a consistent mix without interfering with the wall. The blades are preferably provided in the form of paddles.

Ideally, the motor of the transfer auger is arranged to move the or each shutter and a control means is provided operable to control selectively the operation of the or each shutter, so that the or each shutter can be opened or closed when required. Ideally a ram, preferably an hydraulic ram, is provided for moving the shutter.

Advantageously, the duct comprises a substantially upwardly extending length remote the outlet opening of the or each container, so that the discharge opening of the duct is disposed elevated from the ground and a length of the transfer auger is disposed in the upwardly extending length of the duct. This arrangement provides the advantage in that the feed can be discharged directly to a desired location, for example, a location at which the feed is consumed, in particular, where such a location is not easily accessible. Accordingly, loss of feed during transfer to the desired location is reduced significantly. Conveniently, a latch mechanism is provided configured to secure the upwardly extending length of the duct to the nearest container. Preferably, the upwardly extending length of duct extends laterally in relation to the portion of the duct at the outlet opening of the or each container.

Preferably the motor of the transfer auger is an hydraulic motor.

Advantageously, the apparatus of the invention is mounted on a chassis and connectable to a vehicle, such as for example a tractor. Conveniently, the drive means of the mixer shaft is configured to be coupled with and driven by a drive mechanism of the vehicle. Preferably, the drive means of the mixer shaft is coupled to the mixing shaft via a gear arrangement having a drive to mixer shaft ratio of 40 to 1 thereby minimising the power drawn from the drive.

Preferably, a vibrating mechanism is provided connected with the interior of the or each container for agitating the feed. The vibrating mechanism assists the discharge and prevents blockage. The vibrating mechanism is preferably arranged to be driven by the motor of the transfer auger. Ideally, the operations of the transfer auger and the vibrating mechanism are synchronised so that the transfer auger and the vibrating mechanism are actuated simultaneously.

Conveniently, the container comprises a tank for storing and dispensing feed additives, preferably, liquid additives, such as molasses, fitted in the upper section of the container, the tank occupying an area less than the area of the top opening of the container. Ideally, the tank is connected with the duct by a pipe and a pump is provided for propelling the feed additive from the tank into the duct. Ideally, the pipe is connected with the duct at the discharge outlet so that the pipe opens into a downwardly directed portion of the duct for dispensing the feed additive directly to a desired location simultaneously with the feed dispensed from the container. The tank can be I-shaped, L-shaped, U-shaped or O-shaped or any desired shape which leaves a sufficient area of the top opening of the container open so that the interior of the container can be accessed for cleaning or maintenance and so that ingredients can be loaded into the container.

Conveniently, the container comprises a discharge port arranged in a sealed communication with a blower device provided at the base end of the container, preferably, outside the container for direct discharge of mixed feed by blowing, the blower device comprising a means for drawing the mixed feed from the container and a means for blowing the mixed feed out of the device to the required location.

Further conveniently, the container comprises a loading pipe for transferring feed ingredients into the container.

Preferably, the container comprises a lifting device for lifting or lowering the duct.

In one embodiment, the container comprises more than one outlet openings and the duct comprises corresponding inlet openings arranged in sealed communication with the outlet opening for receiving feed from the container.

Ideally a flexible cover is provided at the top opening of the container, the cover being spreadable substantially sealingly across the top opening of the container to cover the top opening and gatherable to uncover the top opening. Ideally, a mechanism, such as for example, a ratchet, is provided for operating the cover remotely from the top opening. Preferably, the cover is a rollable cover. The provision of the cover in combination with the shutter ensures that the feed remains fresh and uncontaminated during mixing, storage and transportation.

Advantageously, the duct comprises a vent opening for adding feed supplements, the vent opening being provided intermediate the discharge opening of the duct and the outlet opening of the container nearest to the discharge opening of the duct, the vent comprising a cover for closing and opening the vent. Preferably, the vent opening includes a receptacle suitably shaped for receiving the feed supplements.

Conveniently, the apparatus comprises a compartment for storing feed supplements.

It will be appreciated that more than two containers can be provided in the apparatus of the present invention.

The invention will now be more particularly described with reference to the accompanying drawings, which show by the way of example only, embodiments of a feed mixing, dispensing and storage apparatus according to the invention. In the drawings:
Figure 1 is a side elevation of the feed mixing, dispensing and storage apparatus of the invention;
Figure 2 is a plan view from above of the apparatus of Figure 1 showing the interior of the containers;
Figure 3 is an end elevation of the apparatus of Figures 1 and 2, showing the transfer auger;
Figure 4 is a side elevation of a preferred embodiment of the feed mixing, dispensing and storage apparatus of the invention;
Figure 5 is a schematic side elevation of the apparatus of Figure 4 showing funnels for discharging the mixed feed from the interior of the apparatus;
Figure 6 is a plan view from above of the apparatus of Figures 4 and 5 showing the interior of the containers;
Figure 7 is a schematic plan view from above of the apparatus of Figures 4 to 6 showing funnels for discharging the mixed feed from the interior of the apparatus;
Figure 8 is an end elevation of the apparatus of Figures 4 to 7 showing a blower device and a loading pipe; and
Figure 9 is an end elevation of the apparatus of Figures 4 to 8 showing a pipe connecting a feed additive storage tank with the discharge opening of the tubular duct.

Referring to the drawings, one embodiment of the feed mixing, dispensing and storage apparatus 10 of the invention comprises at least a pair of adjacently disposed containers 11. Each container 11 comprises a wall 51 defining a top opening 5 and an interior and a mixing shaft 30 rotatably mounted within the interior of the container 11 and extending horizontally along the interior of the container 11. The mixing shaft 30 is connected to a drive means (not shown). The wall 51 defines an upper section 51a and a lower section 50 of container 11 and a base end 111. The base end 111 has at least one outlet opening 40 through which the feed is dispensed under gravity and a shutter member (not shown) sealingly closing the outlet opening 40. The outlet opening 40 is defined in a plane substantially transverse a vertical axis 300 of the container 11 the by a lowermost downwardly facing portion the base portion 111 of the container 11. The shutter member is controllably movable and to open and close the outlet opening 40.

In the upper section 51a of the container the wall 51 is substantially vertical and rectangular in a plane transverse the vertical axis 300 of the container 11.

The apparatus 10 further comprises a tubular duct 7 extending between the outlet openings 40 of each container 11 below the lower section 50 of the container 11. The duct 7 has a corresponding inlet opening (not shown) arranged in sealed communication with each outlet opening 40 for receiving feed from each container 11. The duct 7 is substantially sealed except for a discharge opening 70 provided in the duct 7 remote the outlet openings 40 of the containers 11 for discharging the feed to a desired location. A transfer auger (not visible in the drawings) is rotatably mounted along the interior of the duct 7 for transferring the feed dispensed from the outlet openings 40 of the containers 11 to the discharge opening 70. The transfer auger is connected to and is driven by an hydraulic motor 19.

The motor 19 of the transfer auger is also arranged to move the shutters and a control means is provided operable to control selectively the operation of the shutters, so that one or both shutters can be opened or closed when required or desired. An hydraulic ram 16 is provided for moving each shutter.

The duct 7 comprises a substantially upwardly extending length 12 remote the outlet openings 40 of the containers 11, so that the discharge opening 70 of the duct 7 is disposed elevated from the ground and a length of the transfer auger is disposed in the upwardly extending length 12 of the duct 7. Due to this arrangement, the feed can be discharged directly to desired location, for example, a location at which the feed is consumed, in particular, where such a location is not easily accessible. A latch mechanism 26 is provided for securing the upwardly extending length 12 of the duct 7 to the nearest container 11. The upwardly extending length 12 of duct 7 extends laterally in relation to the portion of the duct 7 extending between the outlet openings 40 of the containers 11 for compactness and easy access to the desired discharge location.

The apparatus 10 is mounted on a chassis 60 and connectable to a vehicle (not shown), such as for example a tractor. The drive means of the mixer shaft 30 is configured to be coupled with and driven by the drive mechanism of the vehicle. The drive means of the mixer shaft 30 is preferably coupled to the mixing shaft 30 via a gear arrangement having a drive to mixer shaft ratio of 40 to 1 thereby minimising the power drawn from the drive means.

In the lower section 50, the wall 51 converges downwardly around the perimeter of the container 11 defining a funnel shaped structure with an upper wider end 510 forming part of the interior of the container 10 and a lower narrower open end 511 defining the outlet opening 40.struc The funnel shaped structure forms an arrangement for directing the feed to the outlet opening 40.

A vibrating mechanism 15 is provided connected with the interior of each container 11 for agitating the feed. The vibrating mechanism 15 is preferably arranged to be driven by the motor 19 of the transfer auger. The operations of the transfer auger and the vibrating mechanism 15 are synchronised so that the transfer auger and the vibrating mechanism 15 are actuated simultaneously.

The mixing shaft 30 comprises a plurality of blades 31 for mixing the feed the blades 31 being spaced along the mixing shaft 30. The blades 31 extend from the shaft 30 towards the wall of the container 11 and terminate short of the wall 51 so as to provide a consistent mix without interfering with the wall 51. Although not apparent from the drawings, the blades 31 are provided in the form of paddles.

A rollable cover 27 is provided at the top openings 5 of the containers 11. The cover 27 is spreadable substantially sealingly across the top openings 5 of the containers 11 to cover the top openings 5 completely. The cover 27 can be rolled back to uncover the top openings 5. A ratchet mechanism 25 is provided for operating the cover 5 remotely from the top openings 5. The provision of the cover 27 in combination with the shutters at the outlet openings 40 ensures that the feed remains fresh and uncontaminated during mixing,storage and transportation.

The duct comprises a receptacle 18 for adding feed supplements. The receptacle 18 is disposed intermediate the discharge opening 70 of the duct 7 and the outlet opening 40 of the container 11 nearest to the discharge opening 70 of the duct. The receptacle 18 comprises a cover 18a for closing and opening the receptacle. The provision of the receptacle 18 allows supplements to be added to the feed as the feed is being dispensed.

A compartment 20 for storing feed supplements is attached to one of the containers 11.

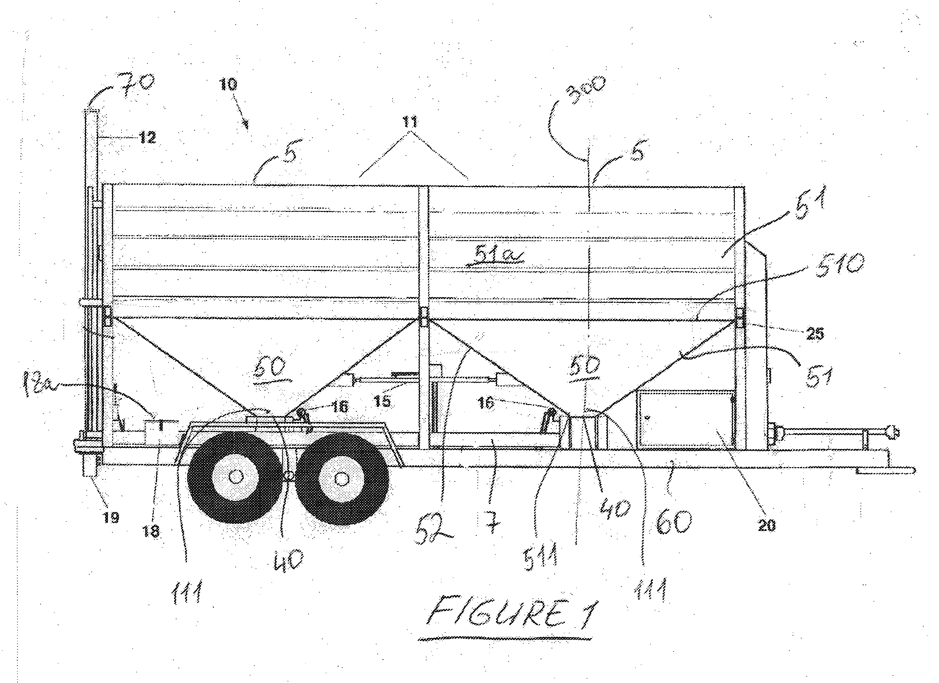

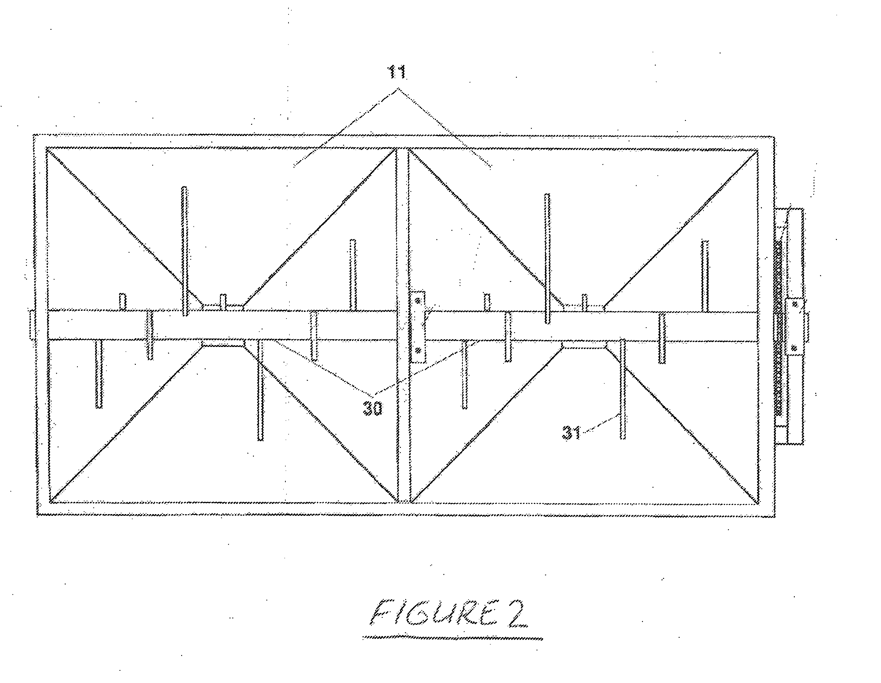

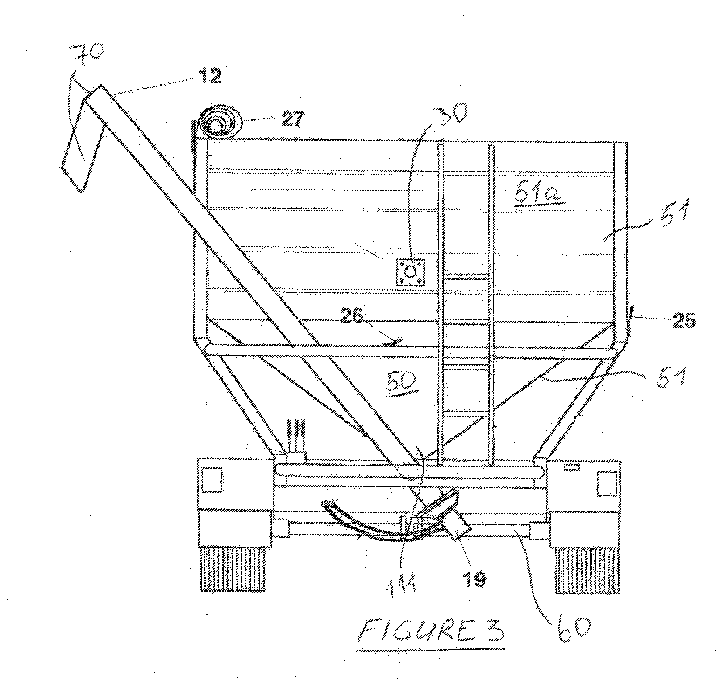

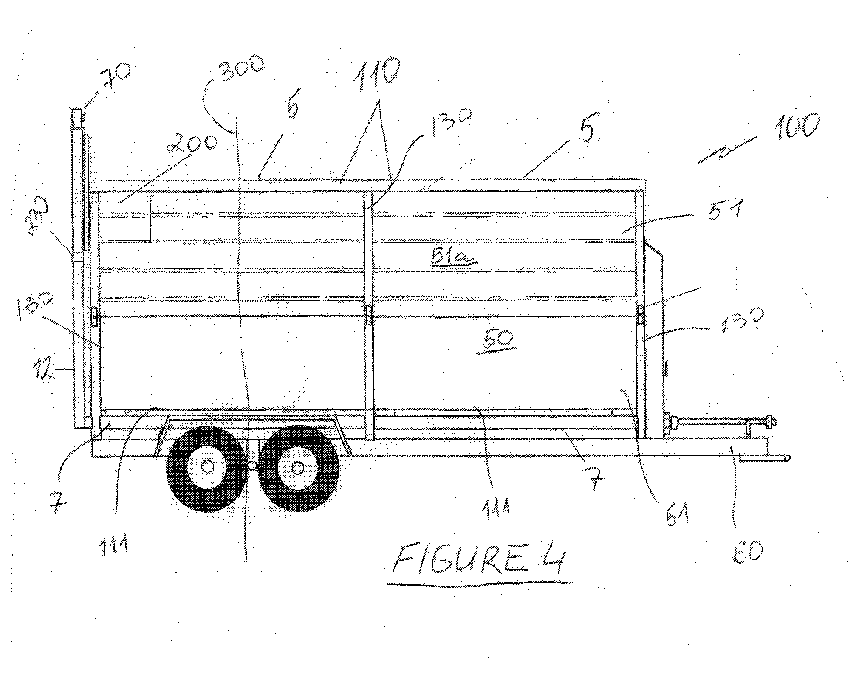

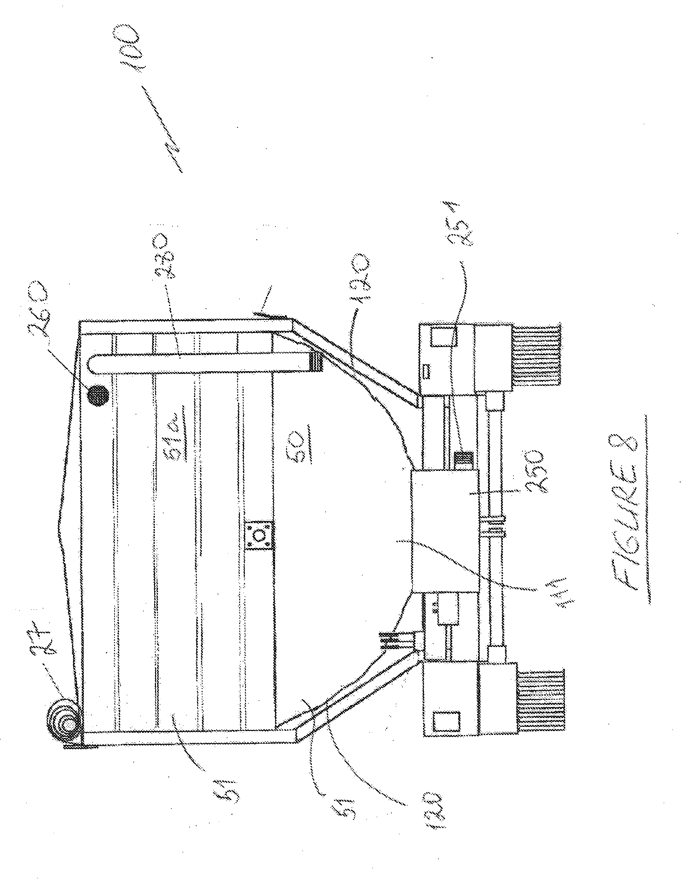

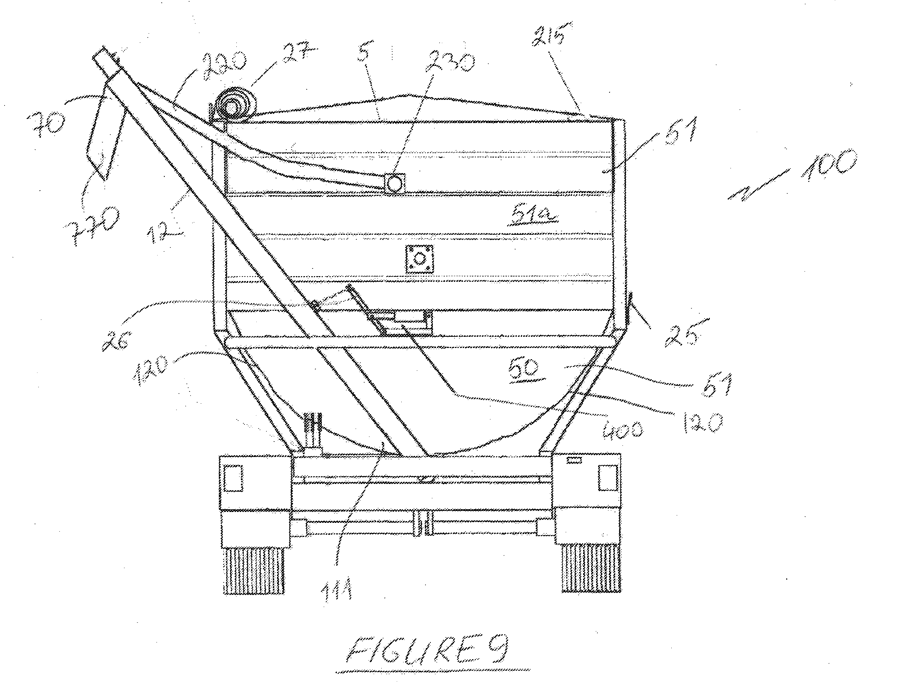

Referring to Figures 4 to 9, a more preferred embodiment of the apparatus of the invention is described wherein the apparatus is indicated generally by reference numeral 100. The apparatus 100 is similar to the grab attachment 10 of Figures 1 to 3 and, accordingly, the same reference numerals as in Figures 1 to 3 have been used to denote the same components of the grab attachment 100 for clarity and brevity. The differences of the arrangement of the apparatus 100 from the apparatus 10 are described below.

The apparatus 100 comprises a container 110. In the lower section 50 of the container 110, the wall 51 converges downwardly at a pair of opposing sides 120 of the container and the wall 51 is substantially vertical at another pair of opposing sides 103 of the container 110. The wall 51 is curved at the sides 120 and is convex on the outside of the container 110 and concave on the inside of the container 110.

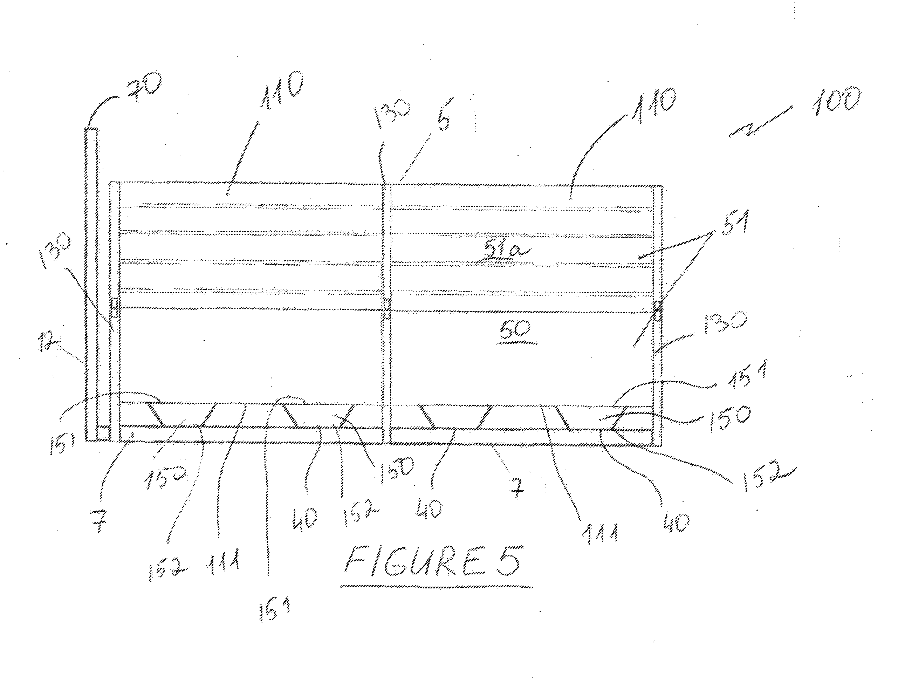

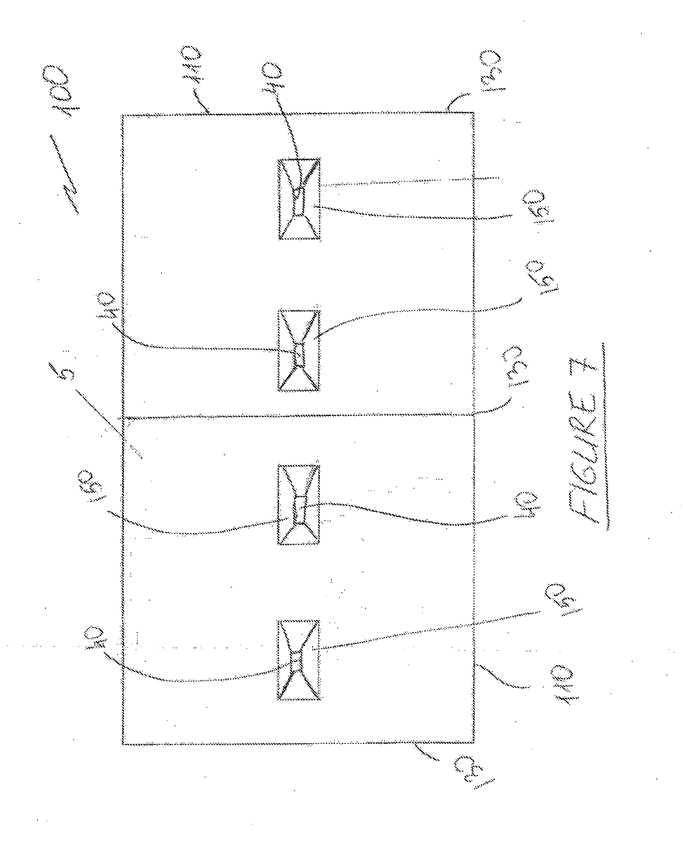

A funnel shaped structure 150 is provided at the base end 111 of the container 110 with an upper wider end 151 sealingly attached to the base end 111 of the container 110 to receive the feed and direct the feed to the outlet opening 40 and a lower narrower open end 152 defining the outlet opening 40. As shown in Figures 5 and 7, the container 110 comprises a pair of outlet openings 40 and the duct 7 comprises corresponding inlet openings arranged in sealed communication with the outlet openings 40 for receiving feed from the container 110.

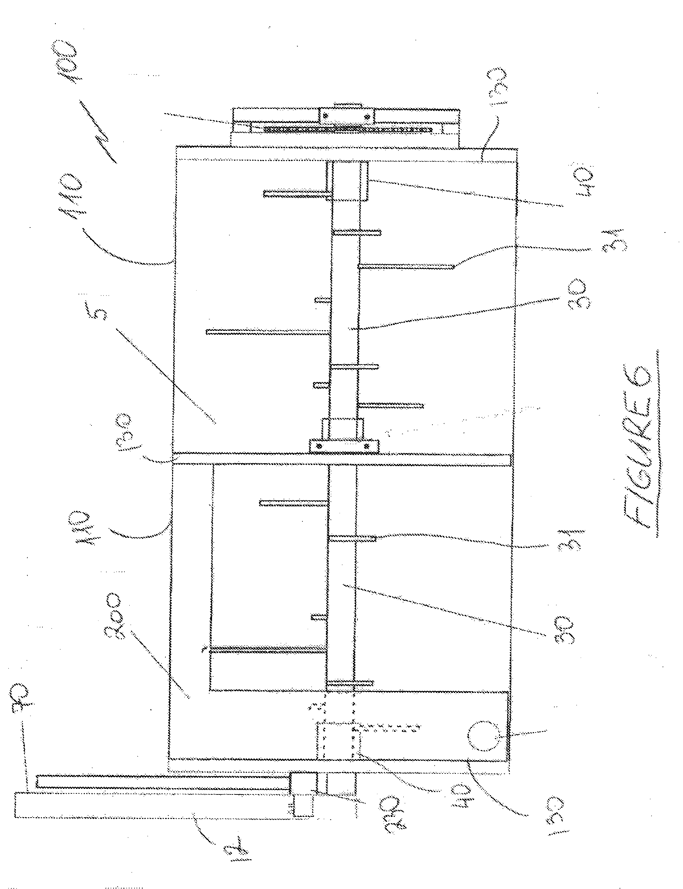

The container 110 comprises a tank 200 for storing and dispensing feed additives, especially liquid additives such as molasses, fitted in the upper section 51a of the container 110. The tank 20 occupies an area less than the area of the top opening 5 of the container 110 so that the container 110 accessed for cleaning or maintenance and so that ingredients can be loaded into the container 110. The tank 200 is connected with the duct 7 by a pipe 220 and a pump 230 is provided for propelling the feed additive from the tank 200 into the duct 7. The pipe 220 is connected with the duct 7 at the discharge outlet 70 so that the pipe 220 opens into a downwardly directed portion 770 of the duct 7 for dispensing the feed additive directly to a desired location simultaneously with the feed dispensed from the container 110. In Figure 6 the tank is L-shaped but it can also be I-shaped, U-shaped or O-shaped. The tank is fillable through a fill aperture 215.

The container 110 also comprises a discharge port (not shown) arranged in a sealed communication with a blower device 250 provided at the base end 111 of the container 110 for direct discharge of mixed feed. The blower 250 device comprises a means for drawing the mixed feed from the container 110 and a means for blowing the mixed feed out of the device to the required location through a nozzle 251.

The container 110 comprises a loading pipe 280 for transferring feed ingredients into the container 110, a lifting device 400 for lifting or lowering the duct and a venting aperture 260.

The tank 200, the blower device 250, the loading pipe 280, the lifting device 400 and the vent aperture 260 can also be provided in the apparatus 10 of Figures 1 to 3.

It will be appreciated that the invention is not limited to the specific details described herein, which are given by way of example only and that various modifications and alterations are possible without departing from the invention as defined in the appended claims.

## Claims

1. A feed mixing, dispensing and storage apparatus (10) comprising at least one container (11) having a vertical axis (300) and a pair of orthogonal horizontal axes, the container comprising a wall defining a top opening (5) and an interior and a mixing shaft (30) rotatably mounted within the interior of the container, the mixing shaft being connected to a drive means;
wherein the wall defines an upper section and a lower section of container and a base end of the container, the base end having at least one outlet opening (40) through which the feed is dispensed under gravity; wherein the lower section of the side wall includes an arrangement configured for directing the feed to the outlet opening;
wherein a shutter member sealingly closes the outlet opening, the shutter member being movable by a further drive means to controllably move the shutter to open and close the outlet opening;
the apparatus further comprising a tubular duct (7) extending from the outlet opening of the container, the duct having an inlet opening arranged in sealed communication with the outlet opening for receiving feed from the container; the duct being substantially sealed except for a discharge opening provided in the duct remote the outlet openings of the container for discharging the feed to a desired location; and
a transfer auger rotatably mounted along the interior of the duct for transferring the feed dispensed from the outlet opening of the container to the discharge opening, the transfer auger being connected to and driven by a motor;
wherein the mixing shaft (30) is mounted substantially horizontally along the interior of the or each container, the mixing shaft comprising a plurality of mixing blades (31) configured to mix the feed in the lower and the upper sections of the container, the blades being spaced along the mixing shaft;
wherein the blades (31) extend from the shaft towards the wall of the container and terminate short of the wall so as to provide a consistent mix without interfering with the wall; and
wherein the blades extend from the shaft in a staggered arrangement along the mixing shaft (30).

2. A feed mixing, dispensing and storage apparatus as claimed in Claim 1, wherein the apparatus comprises a pair of adjacently disposed containers (11) and the tubular duct (7) extends between the outlet openings of each container;
optionally wherein the outlet opening (40) is defined in a plane substantially transverse a vertical axis of the container;
optionally wherein the tubular duct extends below the lower section of the container; and
optionally wherein the container comprises a lifting device (400) for lifting or lowering the duct.

3. A feed mixing, dispensing and storage apparatus as claimed in Claim 1 or Claim 2, wherein the arrangement configured for directing the feed to the outlet opening comprises a funnel shaped structure having a surrounding wall with an upper wider open end and a lower narrower open end, the lower narrower open end defining the outlet opening;
optionally wherein the outlet opening (40) is defined by a lowermost downwardly facing portion of the container;
optionally wherein in the upper section of the container, the wall is polygonal in a plane transverse the vertical axis of the container;
optionally wherein in the upper section of the container, the wall is rectangular in a plane transverse the vertical axis of the container; and
optionally wherein in the upper section of the container the wall is substantially vertical.

4. A feed mixing, dispensing and storage apparatus as claimed in any preceding claim, wherein in the lower section of the container (11) the wall converges downwardly at least at a pair of opposing sides of the container;
optionally wherein in the lower section of the container, the wall converges downwardly at a pair of opposing sides of the container and the wall is substantially vertical at another pair of opposing sides of the container;
optionally wherein in the lower section of the container, the wall converges downwardly around the perimeter of the container;
optionally wherein the funnel shaped structure is defined by the converging wall;
optionally wherein in the lower section of the container, the wall is convex on the outside of the container and concave on the inside of the container at the sides of the container where the wall converges; and
optionally wherein in the lower section of the container the wall, is curved at the sides of the container where the wall converges.

5. A feed mixing, dispensing and storage apparatus as claimed in Claim 3, wherein the upper wider open end of the funnel shaped structure is sealingly attached to the base end of the container to receive the feed and direct the feed to the outlet opening; and
optionally wherein the outlet opening (40) is defined by lowermost downwardly facing edges of the surrounding wall of the funnel shaped structure.

6. A feed mixing, dispensing and storage apparatus as claimed in any preceding claim wherein the blades are provided in the form of paddles (31).

7. A feed mixing, dispensing and storage apparatus as claimed in any preceding claim, wherein the duct (7) comprises a substantially upwardly extending length remote the outlet opening of the or each container, so that the discharge opening of the duct is disposed elevated from the ground and a length of the transfer auger is disposed in the upwardly extending length of the duct;
optionally wherein a latch mechanism (26) is provided configured to secure the upwardly extending length of the duct to the container; and
optionally wherein the upwardly extending length of the duct extends laterally in relation to the duct.

8. A feed mixing, dispensing and storage apparatus as claimed in any preceding claim, wherein the motor of the transfer auger is arranged to move the or each shutter and a control means is provided operable to control selectively the operation of the or each shutter, so that the or each shutter can be opened or closed when required;
optionally wherein a ram (16) is provided for moving the shutter.

9. A feed mixing, dispensing and storage apparatus as claimed in any preceding claim, wherein the apparatus is mounted on a chassis (60) and is connectable to a vehicle;
optionally wherein the drive means of the mixer shaft (30) is configured to be coupled with and driven by a drive mechanism of the vehicle; and
optionally wherein the drive means of the mixer shaft is coupled to the mixing shaft via a gear arrangement having a drive to mixer shaft ratio of 40 to 1 thereby minimising the power drawn from the drive.

10. A feed mixing, dispensing and storage apparatus as claimed in any preceding claim, wherein a vibrating mechanism (15) is provided connected with the interior of the or each container for agitating the feed during dispensing thereby preventing blockage;
optionally wherein the vibrating mechanism is driven by the motor of the transfer auger; and
optionally wherein the operations of the transfer auger and the vibrating mechanism are synchronised so that the transfer auger and the vibrating mechanism are actuated simultaneously.

11. A feed mixing, dispensing and storage apparatus as claimed in any preceding claim, wherein the container comprises a tank (200) for storing and dispensing feed additives, such as molasses, fitted in the upper section of the container, the tank occupying an area less than the area of the top opening of the container;
optionally wherein the tank is connected with the duct by a pipe (220) and a pump is provided for propelling the feed additive from the tank into the duct; and
optionally wherein the pipe is connected with the duct at the discharge outlet so that the pipe opens into a downwardly directed portion of the duct for dispensing the feed additive directly to a desired location simultaneously with the feed dispensed from the container.

12. A feed mixing, dispensing and storage apparatus as claimed in any preceding claim, wherein the container comprises a discharge port arranged in a sealed communication with a blower device (250) provided at the base end of the container for direct discharge of mixed feed, the blower device comprising a means for drawing the mixed feed from the container and a means for blowing the mixed feed out of the device to the required location;
optionally wherein the container comprises a loading pipe (280) for transferring feed ingredients into the container.

13. A feed mixing dispensing and storage apparatus as claimed in any preceding claim, wherein the container (11) comprises more than one outlet openings and the duct (7) comprises corresponding inlet openings arranged in sealed communication with the outlet opening for receiving feed from the container.

14. A feed mixing, dispensing and storage apparatus as claimed in any preceding claim, wherein a flexible cover (27) is provided at the top opening of the container, the cover being spreadable substantially sealingly across the top opening of the container to cover the top opening and gatherable to uncover the top opening;
optionally wherein a mechanism (25) is provided for operating the cover remotely from the top opening;
optionally wherein the mechanism for operating the cover comprises a ratchet; and optionally wherein the cover is a rollable cover.

15. A feed mixing, dispensing and storage apparatus as claimed in any preceding claim, wherein the duct comprises a vent opening (260) for adding feed supplements, the vent opening being provided intermediate the discharge opening of the duct and the outlet opening of the container, the vent comprising a cover for closing and opening the vent;
optionally wherein the vent opening includes a receptacle suitably shaped for receiving the feed supplements; and
optionally wherein the apparatus comprises a compartment (20) for storing feed supplements.

## Patentansprüche

1. Futtermischungs-, Ausgabe- und Lagerungsvorrichtung (10), umfassend mindestens einen Behälter (11) mit einer vertikalen Achse (300) und einem Paar von orthogonalen horizontalen Achsen, wobei der Behälter eine Wand umfasst, die eine obere Öffnung (5) definiert und ein Inneres und eine Mischwelle (30), die drehbar im Inneren des Behälters montiert ist, wobei die Mischwelle mit einem Antriebsmittel verbunden ist;
wobei die Wand einen oberen Abschnitt und einen unteren Abschnitt des Behälters und ein Basisende des Behälters umfasst, wobei das Basisende mindestens eine Auslassöffnung (40) aufweist, durch die das Futter mit Schwerkraft ausgegeben wird; wobei der untere Abschnitt der Seitenwand eine Anordnung umfasst, die konfiguriert ist, um das Futter an die Auslassöffnung zu richten,
wobei ein Verschlusselement dichtend die Auslassöffnung verschließt, wobei das Verschlusselement durch ein weiteres Antriebsmittel bewegt werden kann, um den Verschluss kontrollierbar zu bewegen, um die Auslassöffnung zu öffnen und zu verschließen;
wobei die Vorrichtung weiter eine rohrförmige Leitung (7) umfasst, die sich von der Auslassöffnung des Behälters erstreckt, wobei die Leitung eine Einlassöffnung aufweist, die in abgedichteter Kommunikation mit der Auslassöffnung angeordnet ist, um Futter vom Behälter zu erhalten; wobei die Leitung im Wesentlichen abgedichtet ist, mit Ausnahme einer Entladungsöffnung, die in der Leitung entfernt von den Auslassöffnungen des Behälters bereitgestellt ist, um das Futter an eine gewünschte Stelle zu entladen; und
eine Übertragungsschnecke, die drehbar entlang dem Inneren der Leitung montiert ist, um das Futter zu übertragen, das von der Auslassöffnung des Behälters an die Entladungsöffnung ausgegeben wird, wobei die Übertragungsschnecke mit einem Motor verbunden ist und davon angetrieben wird,
wobei die Mischwelle (30) im Wesentlichen horizontal entlang dem Inneren des oder jedes Behälters montiert ist, wobei die Mischwelle eine Vielzahl von Mischflügeln (31) umfasst, die konfiguriert sind, um das Futter im unteren und im oberen Abschnitt des Behälters zu mischen, wobei die Flügel entlang der Mischwelle beabstandet sind;
wobei sich die Flügel (31) von der Welle zur Wand des Behälters hin erstrecken und kurz vor der Wand enden, um eine gleich bleibende Mischung bereitzustellen, ohne die Wand zu beeinträchtigen,
wobei sich die Flügel von der Welle in einer versetzten Anordnung entlang der Mischwelle (30) erstrecken.

2. Futtermischungs-, Ausgabe- und Lagerungsvorrichtung nach Anspruch 1, wobei die Vorrichtung ein Paar benachbart angeordneter Behälter (11) umfasst und sich die rohrförmige Leitung (7) zwischen den Auslassöffnungen jedes Behälters erstreckt;
optional wobei die Auslassöffnung (40) in einer Ebene definiert ist, die im Wesentlichen quer zu einer vertikalen Achse des Behälters liegt;
optional wobei sich die rohrförmige Leitung unter dem unteren Abschnitt des Behälters erstreckt; und
optional wobei der Behälter eine Hebevorrichtung (400) umfasst, um die Leitung zu heben oder zu senken.

3. Futtermischungs-, Ausgabe- und Lagerungsvorrichtung nach Anspruch 1 oder Anspruch 2, wobei die Anordnung, die konfiguriert ist, um das Futter an die Auslassöffnung zu richten, eine trichterförmige Struktur mit einer umgebenden Wand mit einem oberen weiteren offenen Ende und einem unteren engeren offenen Ende umfasst, wobei das untere engere offene Ende die Auslassöffnung definiert;
optional wobei die Auslassöffnung (40) durch einen untersten nach unten gerichteten Teil des Behälters definiert ist,
optional wobei im oberen Abschnitt des Behälters die Wand polygonal in einer Ebene ist, quer zu einer vertikalen Achse des Behälters;
optional wobei im oberen Abschnitt des Behälters die Wand rechtwinklig in einer Ebene ist, quer zur vertikalen Achse des Behälters; und
optional wobei im oberen Abschnitt des Behälters die Wand im Wesentlichen vertikal ist.

4. Futtermischungs-, Ausgabe- und Lagerungsvorrichtung nach einem der vorhergehenden Ansprüche, wobei im untern Abschnitt des Behälters (11) die Wand nach unten mindestens an einem Paar von einander gegenüber liegenden Seiten des Behälters zusammenläuft;
optional wobei im untere Abschnitt des Behälters die Wand nach unten an einem Paar von einander gegenüber liegenden Seiten des Behälters zusammenläuft und die Wand im Wesentlichen vertikal an einem anderen Paar von einander gegenüber liegenden Seiten des Behälters ist;
optional wobei im unteren Abschnitt des Behälters die Wand nach unten um den Umfang des Behälters zusammenläuft;
optional, wobei die trichterförmige Struktur durch die zusammenlaufende Wand definiert ist;
optional wobei im unteren Abschnitt des Behälters die Wand auf der Außenseite des Behälters konvex und auf der Innenseite des Behälters konkav an den Seiten des Behälters ist, an denen die Wand zusammenläuft; und
optional wobei im unteren Abschnitt des Behälters die Wand an den Seiten des Behälters, an denen die Wand zusammenläuft; gekrümmt ist.

5. Futtermischungs-, Ausgabe- und Lagerungsvorrichtung nach Anspruch 3, wobei das obere weitere offene Ende der trichterförmigen Struktur dichtend am Basisende des Behälters befestigt ist, um das Futter zu erhalten und das Futter auf die Auslassöffnung zu richten; und
optional wobei die Auslassöffnung (40) durch unterste nach unten gerichtete Kanten der umgebenden Wand der trichterförmigen Struktur definiert ist.

6. Futtermischungs-, Ausgabe- und Lagerungsvorrichtung nach einem der vorhergehenden Ansprüche, wobei die Flügel in der Form von Schaufeln (31) bereitgestellt sind.

7. Futtermischungs-, Ausgabe- und Lagerungsvorrichtung nach einem der vorhergehenden Ansprüche, wobei die Leitung (7) eine sich im Wesentlichen nach oben erstreckende Länge entfernt von der Auslassöffnung des oder jedes Behälters umfasst, so dass sich die Entladungsöffnung der Leitung erhöht vom Grund befindet und eine Länge der Übertragungsschnecke in der sich nach oben richtenden Länge der Leitung angeordnet ist;
optional wobei ein Riegelmechanismus (26) bereitgestellt ist, der konfiguriert ist, um die sich nach oben erstreckende Länge der Leitung am Behälter zu befestigen; und
optional wobei sich die nach oben erstreckende Länge der Leitung seitlich mit Bezug auf die Leitung erstreckt.

8. Futtermischungs-, Ausgabe- und Lagerungsvorrichtung nach einem der vorhergehenden Ansprüche, wobei der Motor der Übertragungsschnecke angeordnet ist, um den oder jeden Verschluss zu bewegen, und ein Steuermittel bereitgestellt ist, um im Betrieb selektiv den Betrieb des oder jedes Verschlusses zu steuern, so dass der oder jeder Verschluss geöffnet oder verschlossen werden kann, wenn erforderlich,
optional wobei ein Schieber (16) bereitgestellt ist, um den Verschluss zu bewegen.

9. Futtermischungs-, Ausgabe- und Lagerungsvorrichtung nach einem der vorhergehenden Ansprüche, wobei die Vorrichtung auf einem Fahrgestell (60) montiert ist und mit einem Fahrzeug verbunden werden kann;
optional wobei das Antriebsmittel der Mischwelle (30) konfiguriert ist, um mit einem Antriebsmechanismus des Fahrzeugs gekoppelt und davon angetrieben zu werden; und
optional wobei das Antriebsmittel der Mischwelle mit der Mischwelle über eine Getriebeanordnung gekoppelt ist, die ein Verhältnis zwischen Antrieb und Mischwelle von 40 zu 1 aufweist und dadurch die Leistung minimiert, die vom Antrieb bezogen wird.

10. Futtermischungs-, Ausgabe- und Lagerungsvorrichtung nach einem der vorhergehenden Ansprüche, wobei ein Vibrationsmechanismus (15) bereitgestellt ist, der mit dem Inneren des oder jedes Behälters verbunden ist, um das Futter während der Ausgabe zu rühren und somit eine Blockierung zu verhindern;
optional wobei der Vibrationsmechanismus vom Motor der Übertragungsschnecke angetrieben wird; und
optional wobei die Betriebe der Übertragungsschnecke und des Vibrationsmechanismus synchronisiert sind, so dass die Übertragungsschnecke und der Vibrationsmechanismus gleichzeitig betätigt werden.

11. Futtermischungs-, Ausgabe- und Lagerungsvorrichtung nach einem der vorhergehenden Ansprüche, wobei der Behälter einen Tank (200) umfasst. um Futterzusätze zu lagern und auszugeben, wie z.B. Melassen, der im oberen Abschnitt des Behälters eingepasst ist, wobei der Tank einen Bereich einnimmt, der kleiner als der Bereich der oberen Öffnung des Behälters ist;
optional wobei der Tank mit der Leitung durch ein Rohr (220) verbunden ist, und eine Pumpe bereitgestellt ist, um den Futterzusatz vom Tank in die Leitung zu treiben; und
optional wobei das Rohr mit der Leitung am Entladungsauslass verbunden ist, so dass sich das Rohr in einen nach unten gerichteten Abschnitt der Leitung öffnet, um den Futterzusatz direkt an eine gewünschte Stelle auszugeben, gleichzeitig mit dem Futter, das vom Behälter ausgegeben wird.

12. Futtermischungs-, Ausgabe- und Lagerungsvorrichtung nach einem der vorhergehenden Ansprüche, wobei der Behälter einen Entladungsanschluss umfasst, der in einer abgedichteten Kommunikation mit einer Gebläsevorrichtung (250) angeordnet ist, die am Basisende des Behälters bereitgestellt ist, um das gemischte Futter direkt zu entladen, wobei die Gebläsevorrichtung ein Mittel umfasst, um das gemischte Futter vom Behälter abzuziehen und ein Mittel, um das gemischte Futter aus der Vorrichtung an die erforderliche Stelle zu blasen;
optional wobei der Behälter ein Laderohr (280) umfasst, um Futterbestandteile in den Behälter zu übertragen.

13. Futtermischungs-, Ausgabe- und Lagerungsvorrichtung nach einem der vorhergehenden Ansprüche, wobei der Behälter (11) mehr als eine Auslassöffnung umfasst und die Leitung (7) entsprechende Einlassöffnungen umfasst, die in abgedichteter Kommunikation mit der Auslassöffnung angeordnet sind, um Futter vom Behälter zu erhalten.

14. Futtermischungs-, Ausgabe- und Lagerungsvorrichtung nach einem der vorhergehenden Ansprüche, wobei eine flexible Abdeckung (27) auf der oberen Öffnung des Behälters bereitgestellt ist, wobei die Abdeckung im Wesentlichen abdichtend über die obere Öffnung des Behälters ausgebreitet werden kann, um die obere Öffnung abzudecken, und zusammengezogen werden kann, um die obere Öffnung freizusetzen;
optional wobei ein Mechanismus (25) bereitgestellt ist, um die Abdeckung entfernt von der oberen Öffnung zu betreiben;
optional wobei der Mechanismus zum Betrieb der Abdeckung eine Ratsche umfasst und
optional wobei die Abdeckung eine rollbare Abdeckung ist.

15. Futtermischungs-, Ausgabe- und Lagerungsvorrichtung nach einem der vorhergehenden Ansprüche, wobei die Leitung eine Belüftungsöffnung (260) umfasst, um Futterzusätze hinzuzufügen, wobei die Belüftungsöffnung zwischen der Entladungsöffnung der Leitung und der Auslassöffnung des Behälters bereitgestellt ist, wobei die Belüftung eine Abdeckung umfasst, um die Belüftung zu schließen und zu öffnen;
optional wobei die Belüftungsöffnung einen Auffangbehälter umfasst, der eine geeignete Form aufweist, um die Futterzusätze zu erhalten; und
optional wobei die Vorrichtung eine Abteilung (20) umfasst, um Futterzusätze zu lagern.

## Revendications

1. Appareil de mélange, distribution et stockage d'aliments (10), comprenant au moins un récipient (11) ayant un axe vertical (300) et une paire d'axes horizontaux orthogonaux, le récipient comprenant une paroi définissant une ouverture supérieure (5) et un intérieur et un arbre de mélange (30) monté de manière rotative à l'intérieur du récipient, l'arbre de mélange étant raccordé à un moyen d'entraînement;
dans lequel la paroi définit une section supérieure et une section inférieure du récipient et une extrémité de base du récipient, l'extrémité de base ayant au moins une ouverture de sortie (40) à travers laquelle l'aliment est distribué sous l'effet de la gravité; dans lequel la section inférieure de la paroi latérale comprend un agencement configuré pour diriger l'aliment vers l'ouverture de sortie;
dans lequel un élément formant obturateur ferme de manière étanche l'ouverture de sortie, l'élément formant obturateur étant mobile grâce à un autre moyen d'entraînement pour déplacer de manière contrôlable l'obturateur afin d'ouvrir et de fermer l'ouverture de sortie;
l'appareil comprenant en outre un conduit tubulaire (7) s'étendant à partir de l'ouverture de sortie du récipient, le conduit ayant une ouverture d'entrée agencée en communication étanche avec l'ouverture de sortie pour recevoir l'aliment du récipient; le conduit étant sensiblement étanche excepté pour une ouverture de décharge prévue dans le conduit à distance des ouvertures de sortie du récipient pour décharger l'aliment dans un emplacement souhaité; et
une vis sans fin de transfert montée de manière rotative le long de l'intérieur du conduit pour transférer l'aliment distribué de l'ouverture de sortie du récipient à l'ouverture de décharge, la vis sans fin de transfert étant raccordée à et entraînée par un moteur;
dans lequel l'arbre de mélange (30) est monté de manière sensiblement horizontale le long de l'intérieur du ou de chaque récipient, l'arbre de mélange comprenant une pluralité de pales de mélange (31) configurées pour mélanger l'aliment dans les sections inférieure et supérieure du récipient, les pales étant espacées le long de l'arbre de mélange;
dans lequel les pales (31) s'étendent à partir de l'arbre vers la paroi du récipient et finissent près de la paroi afin de fournir un mélange cohérent sans interférer avec la paroi; et
dans lequel les pales s'étendent à partir de l'arbre dans un agencement en quinconce le long de l'arbre de mélange (30).

2. Appareil de mélange, de distribution et de stockage d'aliments selon la revendication 1, dans lequel l'appareil comprend une paire de récipients (11) disposés de manière adjacente et le conduit tubulaire (7) s'étend entre les ouvertures de sortie de chaque récipient;
facultativement, dans lequel l'ouverture de sortie (40) est définie dans un plan sensiblement transversal à un axe vertical du récipient;
facultativement, dans lequel le conduit tubulaire s'étend au-dessous de la section inférieure du récipient; et
facultativement, dans lequel le récipient comprend un dispositif de levage (400) pour lever ou abaisser le conduit.

3. Appareil de mélange, de distribution et de stockage d'aliments selon la revendication 1 ou la revendication 2, dans lequel l'agencement configuré pour diriger l'aliment vers l'ouverture de sortie comprend une structure en forme d'entonnoir ayant une paroi périphérique avec une extrémité ouverte supérieure plus large et une extrémité ouverte inférieure plus étroite, l'extrémité ouverte inférieure plus étroite définissant l'ouverture de sortie;
facultativement, dans lequel l'ouverture de sortie (40) est définie par la partie la plus basse orientée vers le bas du récipient;
facultativement, dans lequel, dans la section supérieure du récipient, la paroi est polygonale dans un plan transversal à l'axe vertical du récipient;
facultativement, dans lequel, dans la section supérieure du récipient, la paroi est rectangulaire dans un plan transversal à l'axe vertical du récipient; et
facultativement, dans lequel, dans la section supérieure du récipient, la paroi est sensiblement verticale.

4. Appareil de mélange, de distribution et de stockage d'aliments selon l'une quelconque des revendications précédentes, dans lequel, dans la section inférieure du récipient (11), la paroi converge vers le bas au moins au niveau d'une paire de côtés opposés du récipient;
facultativement, dans lequel, dans la section inférieure du récipient, la paroi converge vers le bas au niveau d'une paire de côtés opposés du récipient et la paroi est sensiblement verticale au niveau d'une autre paire de côtés opposés du récipient;
facultativement, dans lequel, dans la section inférieure du récipient, la paroi converge vers le bas autour du périmètre du récipient;
facultativement, dans lequel, la structure en forme d'entonnoir est définie par la paroi convergente;
facultativement, dans lequel, dans la section inférieure du récipient, la paroi est convexe à l'extérieur du récipient et concave à l'intérieur du récipient au niveau des côtés du récipient où la paroi converge; et
facultativement, dans lequel, dans la section inférieure du récipient, la paroi est incurvée au niveau des côtés du récipient où la paroi converge.

5. Appareil de mélange, de distribution et de stockage d'aliments selon la revendication 3, dans lequel l'extrémité ouverte supérieure plus large de la structure en forme d'entonnoir est fixée de manière étanche à l'extrémité de base du récipient pour recevoir l'aliment et diriger l'aliment vers l'ouverture de sortie; et
facultativement, dans lequel, l'ouverture de sortie (40) est définie par les bords les plus bas orientés vers le bas de la paroi périphérique de la structure en forme d'entonnoir.

6. Appareil de mélange, de distribution et de stockage d'aliments selon l'une quelconque des revendications précédentes, dans lequel les pales sont prévues sous la forme d'aubes (31).

7. Appareil de mélange, de distribution et de stockage d'aliments selon l'une quelconque des revendications précédentes, dans lequel le conduit (7) comprend une longueur s'étendant sensiblement vers le haut à distance de l'ouverture de sortie du ou de chaque récipient, de sorte que l'ouverture de décharge du conduit est disposée en hauteur par rapport au sol et une longueur de la vis sans fin de transfert est disposée dans la longueur s'étendant vers le haut du conduit;
facultativement, dans lequel, on prévoit un mécanisme de verrou (26), configuré pour fixer la longueur s'étendant vers le haut du conduit, sur le récipient; et
facultativement, dans lequel, la longueur s'étendant vers le haut du conduit s'étend latéralement par rapport au conduit.

8. Appareil de mélange, de distribution et de stockage d'aliments selon l'une quelconque des revendications précédentes, dans lequel le moteur de la vis sans fin de transfert est agencé pour déplacer le ou chaque obturateur et un moyen de commande est prévu pour commander sélectivement le fonctionnement du ou de chaque obturateur, de sorte que le ou chaque obturateur peut être ouvert ou fermé lorsque cela est nécessaire;
facultativement, dans lequel un vérin (16) est prévu pour déplacer l'obturateur.

9. Appareil de mélange, de distribution et de stockage d'aliments selon l'une quelconque des revendications précédentes, dans lequel l'appareil est monté sur un châssis (60) et peut être raccordé à un véhicule;
facultativement, dans lequel le moyen d'entraînement de l'arbre de mélangeur (30) est configuré pour être couplé avec et entraîné par un mécanisme d'entraînement du véhicule; et
facultativement, dans lequel le moyen d'entraînement de l'arbre de mélangeur est couplé à l'arbre de mélange via un agencement d'engrenage ayant un rapport d'entraînement sur arbre de mélangeur de 40 à 1, minimisant ainsi le courant tiré par l'entraînement.

10. Appareil de mélange, de distribution et de stockage d'aliments selon l'une quelconque des revendications précédentes, dans lequel on prévoit un mécanisme vibrant (15) raccordé à l'intérieur du ou de chaque récipient pour agiter l'aliment pendant la distribution, empêchant ainsi le blocage;
facultativement, le mécanisme vibrant est entraîné par le moteur de la vis sans fin de transfert; et
facultativement, dans lequel les opérations de la vis sans fin de transfert et du mécanisme vibrant sont synchronisées de sorte que la vis sans fin de transfert et le mécanisme vibrant sont actionnés simultanément.

11. Appareil de mélange, de distribution et de stockage d'aliments selon l'une quelconque des revendications précédentes, dans lequel le récipient comprend un réservoir (200) pour stocker et distribuer des additifs alimentaires, tels que des molasses, monté dans la section supérieure du récipient, le réservoir occupant une surface inférieure à la surface de l'ouverture supérieure du récipient;
facultativement, dans lequel le réservoir est raccordé avec le conduit par un tuyau (220) et une pompe est prévue pour propulser l'additif alimentaire du réservoir dans le conduit; et
facultativement, dans lequel le tuyau est raccordé avec le conduit au niveau de la sortie de décharge de sorte que le tuyau s'ouvre dans une partie dirigée vers le bas du conduit pour distribuer le complément alimentaire directement à un emplacement souhaité simultanément avec l'aliment distribué à partir du récipient.

12. Appareil de mélange, de distribution et de stockage d'aliments selon l'une quelconque des revendications précédentes, dans lequel le récipient comprend un orifice de décharge agencé en communication étanche avec un dispositif de soufflante (250) prévu au niveau de l'extrémité de base du récipient pour la décharge directe de l'aliment mélangé, le dispositif de soufflante comprenant un moyen pour aspirer l'aliment mélangé du récipient et un moyen pour souffler l'aliment mélangé hors du dispositif à l'emplacement requis;
facultativement, dans lequel le récipient comprend un tuyau de chargement (280) pour transférer des ingrédients alimentaires dans le récipient.

13. Appareil de mélange, de distribution et de stockage d'aliments selon l'une quelconque des revendications précédentes, dans lequel le récipient (11) comprend plus d'une ouverture de sortie et le conduit (7) comprend des ouvertures d'entrée correspondantes agencées en communication étanche avec l'ouverture de sortie pour recevoir l'aliment du récipient.

14. Appareil de mélange, de distribution et de stockage d'aliments selon l'une quelconque des revendications précédentes, dans lequel un couvercle flexible (27) est prévu au niveau de l'ouverture supérieure du récipient, le couvercle étant déployable de manière sensiblement étanche sur l'ouverture supérieure du récipient pour recouvrir l'ouverture supérieure et pouvant se rassembler pour découvrir l'ouverture supérieure;
facultativement, dans lequel on prévoit un mécanisme (25) pour actionner le couvercle à distance de l'ouverture supérieure;
facultativement, dans lequel le mécanisme pour actionner le couvercle comprend un encliquetage; et
facultativement, dans lequel le couvercle est un couvercle pouvant s'enrouler.

15. Appareil de mélange, de distribution et de stockage d'aliments selon l'une quelconque des revendications précédentes, dans lequel le conduit comprend une ouverture d'évent (260) pour ajouter des compléments alimentaires, l'ouverture d'évent étant prévue entre l'ouverture de décharge du conduit et l'ouverture de sortie du récipient, l'évent comprenant un couvercle pour fermer et ouvrir l'évent;
facultativement, dans lequel l'ouverture d'évent comprend un réceptacle formé de manière approprié pour recevoir les compléments alimentaires; et
facultativement, dans lequel l'appareil comprend un compartiment (20) pour stocker des compléments alimentaires.
